# EUROPÄISCHE PATENTSCHRIFT

(11) **EP 1 803 495 B1**
(45) Veröffentlichungstag und Bekanntmachung des Hinweises auf die Patenterteilung: **04.02.2009**
(21) Anmeldenummer: 06026758.0
(22) Anmeldetag: 22.12.2006
(51) Int. Cl.: B01F 3/02, B01F 9/00, B01F 11/00, B01F 15/06, F17C 5/06, G01G 17/04

(54) **Verfahren zur Herstellung eines unter Druck stehenden Gasgemisches**
Method of manufacturing a pressurized gas mixture
Procédé de fabrication d'un mélange gazeux sous pression

(30) Priorität: 02.01.2006 DE 102006000626
(43) Veröffentlichungstag der Anmeldung: 04.07.2007
(73) Patentinhaber: Linde Aktiengesellschaft, 80807 München (DE)
(72) Erfinder: Schön, Helmut, Dr., 85276 Pfaffenhofen/Ilm (DE); Stoppa, Heinz-Peter, 85778 Haimhausen (DE)
(74) Vertreter: Zahn, Christoph

(56) Entgegenhaltungen:
- EP-A- 0 412 511
- EP-A- 1 591 192
- WO-A-20/06114137
- DE-A1- 19 605 440
- DE-A1- 19 618 268
- N.N.: "Gasgemische - spezifisch für Ihre Anwendung"[Online] Seiten 1-5, XP002426846 Messer Group GmbH, Krefeld, Germany Gefunden im Internet: URL:http://www.messergroup.com/de/Produkte _und_Loesungen/Fachbroschueren/Spezialgase /Gasgemische_spezifisch_fur_Ihre_Andwendun g.pdf> [gefunden am 2007-03-27]
- H. GRABHORN, M. HANISCH: "Gas mixtures"[Online] Seiten 1-45, XP002426870 Gefunden im Internet: URL:http://www.immobilien.ethz.ch/sgu/serv ices/health/gesundheitsfoerderung/Mixtures > [gefunden am 2007-03-27]

## Beschreibung

Die Erfindung betrifft ein Verfahren zur Herstellung eines unter Druck stehenden Gasgemisches.

Unter Druck stehende Gasgemische werden bisher aus Reingasen oder sog. Vorgemischen hergestellt, wobei diese Reingase bzw. Vorgemische unter einem, für das gewünschte Gasgemisch ausreichend hohen Druck vorliegen. Die gravimetrische Herstellung ermöglicht eine große Vielfalt sowie hohe Genauigkeiten hinsichtlich der gewünschten Gasgemischzusammensetzung. Dies erfordert jedoch, dass die verwendeten Reingase bzw. Vorgemische unter einem ausreichend hohen Druck vorliegen; dies ist jedoch in einer Vielzahl von Anwendungsfällen nicht der Fall.

Alternativ dazu können Gasgemische im Niederdruck gemischt und anschließend mittels geeigneter Kompressoren verdichtet werden. Die Palette der mittels dieser Verfahrensweise realisierten Gasgemische ist jedoch aufgrund der erforderlichen Regeleinrichtungen beschränkt. Darüber hinaus wird die Genauigkeit gravimetrisch hergestellter Gasgemische nur in Ausnahmefällen erreicht.

Aus der EP 1591192 A1 ist eine Schutzgas-Versorgungseinrichtung, die wenigstens zwei Mischer umfasst, bekannt, mittels derer ein Schutzgasgemisch, bestehend aus Argon, Kohlendioxid oder Sauerstoff und Helium, herstellbar ist. Ein derartiges Schutzgas eignet sich zum Lichtbogen-Fügen, insbesondere zum LichtbogenSchweißen.

Aufgabe der vorliegenden Erfindung ist es, ein Verfahren zur Herstellung eines unter Druck stehenden Gasgemisches anzugeben, das es ermöglicht, Gasgemische mit hohem Druck gravimetrisch in großer Kombinationsbreite herzustellen. Dies soll auch in der Abwesenheit von Gasversorgungsnetzen, über die bisher üblicherweise Gase unter hohem Druck verfügbar sind, möglich sein.

Zur Lösung dieser Aufgabe wird ein Verfahren gemäß Hauptanspruch zur Herstellung eines unter Druck stehenden Gasgemisches vorgeschlagen, das folgende Verfahrensschritte aufweist:
a) Erzeugung des Gasgemisches mittels einer von Reingases und/oder Vorgemischen gespeisten Dosiereinrichtung,
b) Befüllung zweier parallel angeordneter Gasspeicher mit dem erzeugten Gasgemisch aus der Dosiereinrichtung bis zu einem Druck, der gleich oder berechnet kleiner dem möglichen Druck der Dosiereinrichtung ist,
c) Homogenisierung eines der Gasspeicher,
d) Entnahme, Verdichtung und Überführung des homogenisierten Gasgemisches aus dem Gasspeicher mittels eines Kompressors in den zweiten Gasspeicher und
e) Homogenisierung des zweiten Gasspeichers.

Unter dem vorgenannten Begriff "Gasspeicher" seien insbesondere (Druck)Gasflaschen, Gasflaschenbündel und Paletten mit (Druck)Gasflaschen, aber auch alle weiteren Speichermöglichkeiten für unter Druck stehende Gase zu verstehen.

Weitere vorteilhafte Ausgestaltungen des erfindungsgemäßen Verfahrens zur Herstellung eines unter Druck stehenden Gasgemisches sind dadurch gekennzeichnet, dass
- die Verdichtung mittels eines Membrankompressors erfolgt, wobei dessen Kompressionsverhältnis vorzugsweise zwischen 1:10 und 1:15 beträgt,
- sämtliche der Durchführung des Verfahrens dienenden Anlagenbauteile (Dosiereinrichtung, Gasspeicher, Kompressor, Leitungen, etc.) vor oder zumindest während des Verfahrensschrittes a) evakuiert werden,
- zumindest in der Einlassöffnung eines der Gasspeicher ein in Form eines im Wesentlichen zylindrischen Rohres ausgebildetes Mischrohr angeordnet ist, dessen Wandung zumindest teilweise perforiert ist, und die Zuführung des Gasgemisches in den oder die Gasspeicher über das bzw. die Mischrohre erfolgt und
- vor und/oder nach der Verdichtung eine Abkühlung des zu verdichtenden bzw. des verdichteten Gasgemisches erfolgt.

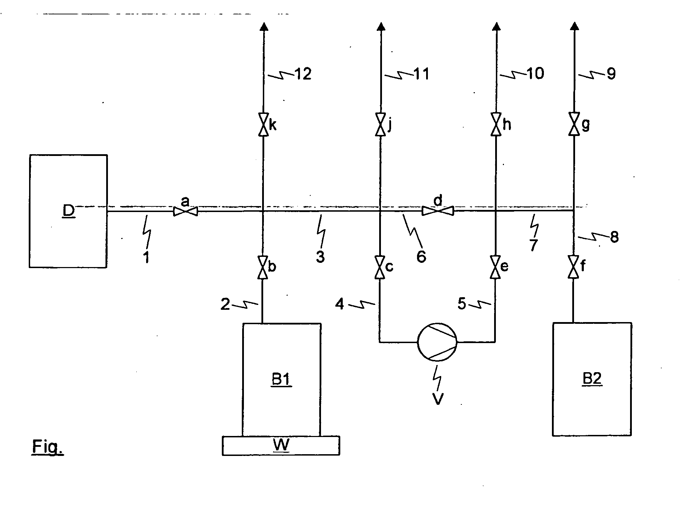

Das erfindungsgemäße Verfahren zur Herstellung eines unter Druck stehenden Gasgemisches sowie weitere Ausgestaltungen desselben seien nachfolgend anhand der in der Figur dargestellten Verfahrensweise näher erläutert.

In der Figur dargestellt ist eine zum Stand der Technik zählende Füll- und Dosiereinrichtung - im Folgenden nurmehr als "Dosiereinrichtung" bezeichnet -, die in bekannter Weise von Reingasen und/oder Vorgemischen gespeist wird. Dargestellt sind ferner zwei Gasspeicher B1 und B2, wobei ersterer auf einer Waage W angeordnet ist. Des Weiteren ist ein Kompressor V vorgesehen, der in vorteilhafter Weise als Membrankompressor mit einem Kompressionsverhältnis zwischen 1:10 und 1:15 ausgebildet ist.

Das Vorsehen der Waage W ist für das erfindungsgemäße Verfahren nicht zwingend erforderlich, aber sehr vorteilhaft, das Gasgemische, die mittels manometrischer Messung hergestellt werden, um Größenordnungen ungenauer in ihrer Zusammensetzung als gravimetrisch hergestellt Gasgemische sind.

Des Weiteren sind eine Vielzahl von Leitungen 1 bis 12 sowie Ventile a bis k, auf deren Funktion im Folgenden näher eingegangen werden wird, vorgesehen.

Im Regelfall wird vor dem Beginn der erfindungsgemäßen Verfahrensweise eine Evakuierung der vorgenannten Anlagenbauteile bzw. -komponenten vorgenommen. Dazu erfolgt über zumindest eine der Leitungen 9 bis 12 bei entsprechend geöffneten Ventilen g bis k ein Evakuieren sämtlicher Anlagenkomponenten.

Daran anschließend werden die Ventile c, e sowie die in der oder den Evakuierungsleitungen 9 bis 12 geöffneten Ventilen g bis k geschlossen und die Gasspeicher B1 und B2 über die Leitungsabschnitte 1 bis 3 sowie 6 bis 8 aus der Dosiereinrichtung D befüllt. Hierbei erfolgt die Befüllung der Gasspeicher B1 und B2 mit dem in der Dosiereinrichtung D erzeugten Gasgemisch bis zu einem Druck, der gleich oder berechnet kleiner dem möglichen Druck der Dosiereinrichtung D ist. Diese Verfahrensweise hat den Vorteil, dass die für die Realisierung des erfindungsgemäßen Verfahrens erforderliche Anlage auch für eine Verfahrensweise gemäß dem Stand der Technik genutzt werden kann - also beispielsweise die gleichzeitige Befüllung zweier Gasspeicher.

Sobald die Befüllung der Gasspeicher B1 und B2 beendet ist, erfolgt eine Homogenisierung des Gasspeichers B1. Dies kann mittels der dem Fachmann aus dem Stand der Technik bekannten Methoden, wie beispielsweise Rollen einzelner (Druck)Gasflaschen, Schwenken von Bündeln oder Paletten, Erwärmen einzelner (Druck)Gastlaschen mittels eines sog. "Fußbades", etc., erfolgen.

Bei den zum Stand der Technik zählenden Methoden zur Homogenisierung durch mechanische Bewegung des Gasspeichers B1 ist eine Trennung dieses Behälters von der Anlage und eine zeitliche Unterbrechung der Füllung bis zu 2 Stunden erforderlich, was die Effektivität der Anlage bzw. des Verfahrens wesentlich reduziert. Im Falle einer manometrischen anstelle einer gravimetrischen Füllung kann man sich eine Erwärmung des Gasspeichers B1 in der Anlage vorstellen. Der "zeitliche Verlust" bleibt jedoch erhalten. Hinzu kommt der Nachteil, dass der nachfolgenden Verdichtung V ein erwärmten Gas zugeführt wird.

Denkbar ist auch, zumindest den Gasspeicher B1 - vorzugsweise jedoch beide Gasspeicher B1 und B2 - mit einem Mischrohr, wie es Gegenstand der zeitgleich angemeldeten deutschen Patentanmeldung DE 102006000627 A1 ist, zu versehen. Durch das Vorsehen eines derartigen Mischrohres erfolgt bereits während der Zuführung des Gasgemisches in die Gasspeicher B1 und B2 eine ausreichende Homogenisierung des Gasgemisches.

Unabhängig davon, auf welchem Wege die Homogenisierung des in den Gasspeicher B1 geleiteten Gasgemisches realisiert wird, ist darauf zu achten, dass mit dem nachfolgenden Verfahrensschritt erst dann begonnen wird, wenn eine ausreichende Homogenisierung des in dem Gasspeicher B1 befindlichen Gasgemisches erreicht ist.

Sobald dies geschehen ist, werden die Ventile c und e geöffnet, Ventil d geschlossen und der Kompressor V angefahren. Nunmehr wird - da auch das Ventil a zur Dosiereinrichtung D geschlossen ist - mittels des Kompressors V homogenisiertes Gasgemisch aus dem Gasspeicher B1 über die Leitungsabschnitte 2 bis 4 entnommen und über die Leitungsabschnitte 5, 7 und 8 dem zweiten Gasspeicher B2 zugeführt.

Der sich im Gasspeicher B2 einstellende Druck setzt sich aus dem Fülldruck und einem aus der Temperaturerhöhung resultierenden Druckanstieg zusammen.

Die Verdichtung V des aus dem Gasspeicher B1 abgezogenen Gasgemisches kann im Prinzip mit jedem beliebigen Kompressor realisiert werden, sofern dieser so ausgestaltet ist, dass er keine Verunreinigung des Gasgemisches verursacht. Aus den vorgenannten Gründen kommen daher vorzugsweise sog. Membrankompressoren zur Anwendung, wobei deren Kompressionsverhältnis vorzugsweise zwischen 1:10 und 1:15 beträgt.

In der Figur nicht dargestellt ist eine vorteilhafte Ausgestaltung des erfindungsgemäßen Verfahrens, bei der vor und/oder nach dem Verdichter V ein bzw. zwei Wärmetauscher vorgesehen sind, in dem bzw. in denen das zu verdichtende bzw. verdichtete Gasgemisch - bspw. gegen Kühlwasser - abgekühlt wird. Bei der Befüllung der Gasspeicher B1 und B2 kommt es zwangsläufig zu einer Erwärmung des ihnen zugeführten Gasgemisches; des Weiteren erfolgt durch die Verdichtung V eine weitere Erwärmung des Gasspeichers B2. Da das Verdichtungsverhältnis konstant ist, kann der Gasspeicher B2 daher nicht so vollständig gefüllt werden, wie dies gewünscht wäre. Zudem kann die in ihm erreichte Temperatur über die zulässige Temperatur - dies beträgt oftmals 70 °C - ansteigen. Bei einer Vielzahl von Anwendungsfällen ist daher das Vorsehen einer Kühlung erforderlich, zumindest jedoch zweckmäßig.

Nach Erreichen des im Gasspeicher B1 gewünschten Druckes wird der Kompressor V abgeschaltet. Nunmehr erfolgt - sofern nicht bereits während der Gaszuführung über ein Mischrohr geschehen - nach Schließen des Ventils f ein Homogenisieren des Gasspeichers B2.

Der Gasspeicher B1 wird bei geöffneten Ventilen b und k über die Leitungsabschnitte 2 und 12 entlastet bzw. entleert.

Das erfindungsgemäße Verfahren zur Herstellung eines unter Druck stehenden Gasgemisches ermöglicht es nunmehr, Gasgemische mit hohem Druck gravimetrisch in großer Kombinationsbreite herzustellen. Dies gelingt auch dann, wenn die für die gewünschte Gasgemischzusammensetzung erforderlichen Gase nicht unter hohem Druck verfügbar sind.

Ein weiterer Vorteil des erfindungsgemäßen Verfahrens zur Herstellung eines unter Druck stehenden Gasgemisches zeigt sich bei der Herstellung von Gasgemischen aus brennbaren und oxidierenden Gasen. Hierbei muss häufig der Explosions- und damit Zündbereich "durchfahren" werden. Zur Minimierung der Folgen einer möglichen Explosion darf daher nur bei geringen Drücken gearbeitet werden; bei der Befüllung der Gasspeicher B1 und B2 aus der Dosiereinrichtung D bis zu einem Druck, der gleich oder berechnet kleiner dem möglichen Druck der Dosiereinrichtung D ist, kann diese Vorgabe eingehalten werden. Da nach der Zuführung und Homogenisierung des Gasgemisches in dem oder den Gasspeichem B1 und B2 kein explosionsfähiges Gasgemisch mehr vorliegt, ist die nachfolgende Komprimierung auch im Falle der Herstellung von Gasgemischen aus brennbaren und oxidierenden Gasen als unkritisch anzusehen.

Das erfindungsgemäße Verfahren zur Herstellung eines unter Druck stehenden Gasgemisches eignet sich darüber hinaus - ohne dass es hierzu weiterer technischer Einrichtungen bedarf - Reingase unter einem erhöhten Druck abzufüllen. Dies gilt insbesondere für seltene und/oder nur in geringen Mengen, aber unter hohem Druck benötigte Reingase, für die das Bereitstellen einer speziellen Hochdruckversorgung und -verteilung ökonomisch nicht sinnvoll ist.

## Patentansprüche

1. Verfahren zur Herstellung eines unter Druck stehenden Gasgemisches, aufweisend folgende Verfahrensschritte:
a) Erzeugung des Gasgemisches mittels einer von Reingasen und/oder Vorgemischen gespeisten Dosiereinrichtung (D),
b) Befüllung zweier parallel angeordneter Gasspeicher (B1, 82) mit dem erzeugten Gasgemisch aus der Dosiereinrichtung (D) bis zu einem Druck, der gleich oder berechnet kleiner dem möglichen Druck der Dosiereinrichtung (D) ist,
c) Homogenisierung eines der Gasspeicher (B1).
d) Entnahme, Verdichtung (V) und Überführung des homogenisierten Gasgemisches aus dem Gasspeicher (B1) mittels eines Kompressors (V) in den zweiten Gasspeicher (B2) und
e) Homogenisierung des zweiten Gasspeichers (B2).

2. Verfahren nach Anspruch 1, **dadurch gekennzeichnet, dass** die Verdichtung mittels eines Membrankompressors (V) erfolgt.

3. Verfahren nach Anspruch 2, **dadurch gekennzeichnet, dass** das Kompressionsverhältnis des Membrankompressors (V) zwischen 1:10 und 1:15 beträgt.

4. Verfahren nach einem der vorhergehenden Ansprüche 1 bis 3, **dadurch gekennzeichnet, dass** die der Durchführung des Verfahrens dienenden Anlagenteile vor oder zumindest während des Verfahrensschrittes a) evakuiert werden.

5. Verfahren nach einem der vorhergehenden Ansprüche 1 bis 4, **dadurch gekennzeichnet, dass** zumindest in der Einlassöffnung eines der Gasspeicher (B1, B2) ein in Form eines zylindrischen Rohres ausgebildetes Mischrohr angeordnet ist, dessen Wandung zumindest teilweise perforiert ist, und die Zuführung des Gasgemisches in den oder die Gasspeicher (B1, B2) über das bzw. die Mischrohre erfolgt.

6. Verfahren nach einem der vorhergehenden Ansprüche 1 bis 5, **dadurch gekennzeichnet, dass** vor und/oder nach der Verdichtung (V) eine Abkühlung des zu verdichtenden bzw. des verdichteten Gasgemisches erfolgt.

## Claims

1. Method of manufacturing a pressurized gas mixture comprising the following method steps:
a) generating the gas mixture by means of a metering appliance (D) fed by pure gases and/or premixes,
b) charging two gas reservoirs (B1, B2) arranged in parallel with the generated gas mixture from the metering appliance (D) to a pressure which is equal to or is calculated to be less than the possible pressure of the metering appliance (D).
c) homogenizing one of the gas reservoirs (B1),
d) taking off, compressing (V) and transferring the homogenized gas mixture from the gas reservoir (B1) by means of a compressor (V) to the second gas reservoir (B2) and
e) homogenizing the second gas reservoir (B2).

2. Method according to Claim 1, **characterized in that** the compression proceeds by means of a membrane compressor (V) .

3. Method according to Claim 2, **characterized in that** the compression ratio of the membrane compressor (V) is between 1:10 and 1:15.

4. Method according to any of the preceding Claims 1 to 3, **characterized in that** the plant components which serve for carrying out the method are evacuated before or at least during method step a).

5. Method according to any of the preceding Claims 1 to 4, **characterized in that** at least in the inlet opening of one of the gas reservoirs (B1, B2) a mixing tube constructed in the form of a cylindrical tube is arranged, the wall of which is at least in part perforated, and the gas mixture is fed into the gas reservoir or reservoirs (B1, B2) via the mixing tube or mixing tubes.

6. Method according to any of the preceding Claims 1 to 5, **characterized in that**, before and/or after compression (V), the gas mixture which is to be compressed or the compressed gas mixture is cooled.

## Revendications

1. Procédé pour la fabrication d'un mélange gazeux mis sous pression, présentant les étapes de procédé suivantes :
a) production du mélange gazeux au moyen d'un dispositif de dosage (D) alimenté par des gaz purs et/ou des prémélanges,
b) remplissage de deux réservoirs de gaz (B1, B2) disposés en parallèle avec le mélange gazeux généré à partir du dispositif de dosage (D) jusqu'à une pression qui est égale ou approximativement inférieure à la pression possible du dispositif de dosage (D),
c) homogénéisation de l'un des réservoirs de gaz (B1),
d) prélèvement, compression (V) et transfert du mélange gazeux homogénéisé du réservoir de gaz (B1) au moyen d'un compresseur (V) dans le second réservoir de gaz (B2) et
e) homogénéisation du second réservoir de gaz (B2).

2. Procédé selon la revendication 1, **caractérisé en ce que** la compression s'effectue au moyen d'un compresseur à membrane (V).

3. Procédé selon la revendication 2, **caractérisé en ce que** le rapport de compression du compresseur à membrane (V) se situe entre 1:10 et 1:15.

4. Procédé selon l'une quelconque des revendications précédentes 1 à 3, **caractérisé en ce que** les parties d'installation servant à la mise en oeuvre du procédé sont mises sous vide avant ou au moins pendant l'étape de procédé a).

5. Procédé selon l'une quelconque des revendications précédentes 1 à 4, **caractérisé en ce qu'**au moins dans l'ouverture d'entrée de l'un des réservoirs de gaz (B1, B2) est disposé un tuyau de mélange conçu sous forme d'un tuyau cylindrique, dont la paroi est au moins en partie perforée, et l'arrivée du mélange gazeux dans le ou les réservoirs de gaz (B1, B2) s'effectue au moyen du ou des tuyaux de mélange.

6. Procédé selon l'une quelconque des revendications précédentes 1 à 5, **caractérisé en ce qu'**un refroidissement du mélange gazeux à comprimer ou du mélange gazeux comprimé intervient avant et/ou après la compression (V).
